# EUROPÄISCHE PATENTANMELDUNG

(11) **EP 3 744 464 A1**
(43) Veröffentlichungstag der Anmeldung: **02.12.2020**
(21) Anmeldenummer: 19020349.7
(22) Anmeldetag: 28.05.2019
(51) Int. Cl.: B23K 9/16, B23K 9/29, B23K 26/14

(54) **SCHNELLWECHSELSYSTEM FÜR SCHUTZGAS-SCHLEPPDÜSEN**

(71) Anmelder: Linde GmbH, 82049 Pullach (DE)
(72) Erfinder: PFREUNTNER, Michael, 85716 Unterschleissheim (DE)
(74) Vertreter: Lu, Jing

(57) **Zusammenfassung**

Die Erfindung betrifft eine Vorrichtung zur auswechselbaren Befestigung einer Gasdüse, umfassend ein längliches Trägerelement (10), das einen Düsenabschnitt (16) zur Befestigung einer Gasdüse (30) aufweist und mit einem gekrümmten Einhängeabschnitt (12) versehen ist, und ein Haltebauteil (20), das mit mindestens einer Ausnehmung (22) versehen ist, welche so geformt ist, dass der Einhängeabschnitt (12) des Trägerelements in die Ausnehmung (22) eingebracht werden kann, so dass ein formschlüssiger Eingriff zwischen dem Trägerelement (10) und dem Haltebauteil (20) entsteht.

## Beschreibung

Die Erfindung betrifft eine Vorrichtung zur auswechselbaren Befestigung einer Gasdüse für einen Schweißprozess.

Im Bereich der Schweißtechnik werden zu verschiedenen Zwecken Gase in den Arbeitsbereich am Werkstück eingeleitet. Insbesondere handelt es sich dabei um Schutzgase, also beispielsweise um Inertgase, die eine Gasschicht um den Bearbeitungsbereich bilden und eine Oxidation der Materialien bei oder nach einem Schweißprozess bzw. bei einer Wärmebehandlung verhindern. Außerdem können Gase gezielt eingesetzt werden, um Bearbeitungsparameter zu beeinflussen. Das Schutzgas wird üblicherweise über Düsen ausgegeben, die mit dem Brenner integriert sind. Je nach verarbeitetem Werkstoff und gewünschtem Effekt kann es auch notwendig oder sinnvoll sein, zusätzlich zum Schutzgas im direkten Bearbeitungsbereich auch den weiteren bzw. schon bearbeiteten Bereich mit Gas zu beaufschlagen, beispielsweise bis zum Unterschreiten der Oxidationstemperatur. Dieser sekundäre Gasschutz wird oftmals durch sogenannte Schleppdüsen erreicht, die zusätzlich am Brenner oder an nachlaufenden Abdeckungen wie z.B. einem Schleppschuh angebracht werden.

Üblicherweise wird die Schleppdüse über Schlauchschellen und ähnliche Klemmelemente am Brenner oder am Schleppschuh befestigt. Es wird also beispielsweise eine Schelle am Brennerrohr fixiert, in welche eine Gasdüse eingeführt und dann durch Verschrauben der Schelle fest eingeklemmt werden kann. Als weitere Möglichkeit werden Düsen verwendet, die mit einem geeigneten Gewinde versehen und fest mit dem Brennerelement oder einer Abdeckung verschraubt sind. Ebenso können auch Schleppdüsen bereits fest in einen Brenner integriert sein.

In all diesen Fällen wird aber ein Wechsel der Schutzgasdüse, etwa zur Reinigung, oder ein Wechsel der Brennerelektrode sehr aufwendig, so dass die Ausfallzeit bei Schweißprozessen erhöht wird.

Der Erfindung liegt daher die Aufgabe zugrunde, eine einfachere Anordnung einer Gasdüse zu erreichen.

Diese Aufgabe wird dadurch gelöst, dass eine Vorrichtung zur auswechselbaren Befestigung einer Gasdüse vorgeschlagen wird, wobei die Vorrichtung ein lang es Trägerelement umfasst, das einen Düsenabschnitt zur Befestigung einer Gasdüse aufweist und mit einem gekrümmten Einhängeabschnitt versehen ist, und ein Haltebauteil, das mit mindestens einer Ausnehmung versehen ist, welche so geformt ist, dass der Einhängeabschnitt des Trägerelements in die Ausnehmung eingebracht werden kann, so dass ein formschlüssiger Eingriff zwischen dem Trägerelement und dem Haltebauteil entsteht. Auf diese Weise kann eine Gasdüse durch einfaches Ein- und Aushängen in ein entsprechendes Haltebauteil befestigt werden und schnell ohne Werkzeuggebrauch ausgewechselt werden. Eine derartige Vorrichtung bietet sich insbesondere für Schleppgasdüsen an, die zusätzlich angebracht werden, kann aber auch für andere Gasdüsen einsetzbar sein.

Dabei kann das Haltebauteil einen Adapterring umfassen, der an einem rohrförmigen Bauteil, wie etwa direkt an einem Brenner oder einem anderen Element befestigbar ist.

Eine Ausnehmung kann dann beispielsweise in einer axialen Endfläche und/oder in der äußeren Umfangsfläche des Adapterrings angeordnet sein. So kann die Befestigung flexibel auf die jeweiligen Platzverhältnisse angepasst werden.

Der Adapterring kann auch mit mehreren in axialer Richtung und/oder entlang des Umfangs des Adapterrings voneinander beabstandeten Ausnehmungen versehen sein, so dass auch ohne Umsetzen des Adapterrings eine schnelle Veränderung der Düsenposition in definierten Abständen möglich ist.

Optional kann eine Ausnehmung in einem Winkel zur Mittelachse des Adapterrings verlaufen, wobei der Winkel kleiner als 90° ist. Dabei können alle Ausnehmungen als Sackloch, Langloch oder als Durchgangsloch oder in Form einer Fräsung gefertigt sein. Eine solche Ausnehmung kann beispielsweise durch eine Fräsung entlang der Umfangsrichtung des Adapterrings ausgeführt werden.

Bevorzugt entspricht die Form der mindestens einen Ausnehmung im Wesentlichen der Form des Einhängeabschnitts, wobei die Abmessungen relativ passgenau oder mit Spiel vorgesehen sein können, solange der Halt der Bauteile zueinander ausreichend fest ist.

In einer Ausführungsform kann das Trägerelement aus einem streifenförmigen Materialstück gefertigt sein, beispielsweise aus einem ausreichend dicken Blechstreifen, der auf einfache Weise durch Biegen oder andere Umformverfahren zu einem Trägerelement geformt werden kann.

In einer weiteren Ausführungsform kann das Haltebauteil einstückig mit einem Schweißbrenner oder einer Halterung für einen Schweißbrenner ausgebildet sein, so dass kein Adapter notwendig ist.

Eine erfindungsgemäße Vorrichtung zur Gasdüsenbefestigung bietet verschiedene Vorteile. Da die Gasdüse an dem starren Trägerelement fixiert werden kann und Lage und Abstand zum Adapterring damit konstant bleiben können, kann zuverlässig der optimale Abstand der Gasdüse zum Bearbeitungsbereich eingehalten werden. Durch Versetzen des Adapterrings am Brenner kann dieser Abstand auch nach Wunsch verändert und auf einen neuen Wert festgelegt werden. Das Ein- und Aushängen der Düse ist ohne Werkzeug möglich und erleichtert das Wechseln oder Säubern der Düse, so dass Ausfallzeiten erheblich reduziert werden. Ein Wechsel der Gasdüse passend zur jeweiligen Schweißaufgabe ist durch die schnelle Montage problemlos möglich. Außerdem kann ein derartiges System mit jedem beliebigen Brenner verwendet werden, solange das entsprechende Adapterelement angebracht werden kann bzw. eine passende Ausnehmung für das Trägerelement vorhanden ist. Beispielsweise können Adapterringe in unterschiedlichen Durchmessern mit einem einzelnen Düsenträgerelement bereitgestellt werden und so auf mehrere Brennertypen angepasst werden. Ein weiterer Vorteil besteht darin, dass auch bei einer Kollision der Gasdüse mit der Bauteiloberfläche, z.B. durch Anstoßen, die so ausgeführte Befestigung der Gasdüse nachgibt und z.B. nach oben teilweise aus der Ausnehmung geschoben wird, so dass der Brenner und die Gasdüse dabei keinen Schaden nehmen.

Die Erfindung sowie weitere Einzelheiten der Erfindung werden im Folgenden anhand von in den Zeichnungen schematisch dargestellten Ausführungsbeispielen näher erläutert, wobei
Figur 1 eine perspektivische Darstellung eines Adapterrings an einem Brenner mit einem Trägerelement gemäß einer Ausführungsform der Erfindung zeigt;
Figur 2 eine erste Ausführungsform der Erfindung mit einem senkrechten Sackloch im Querschnitt skizziert;
Figur 3 eine weitere Ausführungsform der Erfindung mit einem senkrechten Durchgangsloch im Querschnitt skizziert,
Figur 4 eine weitere Ausführungsform der Erfindung mit einer gegenüber der Achse geneigten Ausnehmung im Querschnitt zeigt;
Figur 5 eine weitere Ausführungsform der Erfindung mit einer Ausnehmung in der Umfangsfläche im Querschnitt zeigt; und
Figur 6 eine weitere Ausführungsform der Erfindung mit mehreren Ausnehmungen in der Umfangsfläche im Querschnitt zeigt.

### Ausführliche Beschreibung

Gemäß einer Ausführungsform der Erfindung wird eine Schnellwechselhalterung bereitgestellt, die ein Trägerelement für eine Gasdüse sowie eine entsprechende Ausnehmung an einem Haltebauteil wie an einem Brenner, an einem Adapterelement oder an einem anderen geeigneten Element umfasst. Die Ausnehmung ist so gestaltet, dass ein gekrümmter Einhängeabschnitt des Trägerelements in die Ausnehmung eingebracht werden kann und dort das Trägerelement in einer vorgegebenen Position durch einen Formschluss halten kann. Die Ausnehmung entspricht also in ihren Abmessungen mindestens dem darin einzubringenden Einhängeabschnitt, kann aber auch um ein gewisses Maß größer gestaltet sein, solange ein sicherer Halt des Trägerelements in der Ausnehmung gewährleistet ist. Falls ein Adapterelement verwendet ist, soll dieses in Bezug auf seine Wandstärke bzw. seinen Umfang so bemessen sein, dass die Ausnehmung darin untergebracht werden kann. Dabei kann die Ausnehmung im Wesentlichen in eine Richtung geöffnet sein, die bei Anbringung des Adapterelements im Betrieb von der Brennerdüse weg weist.

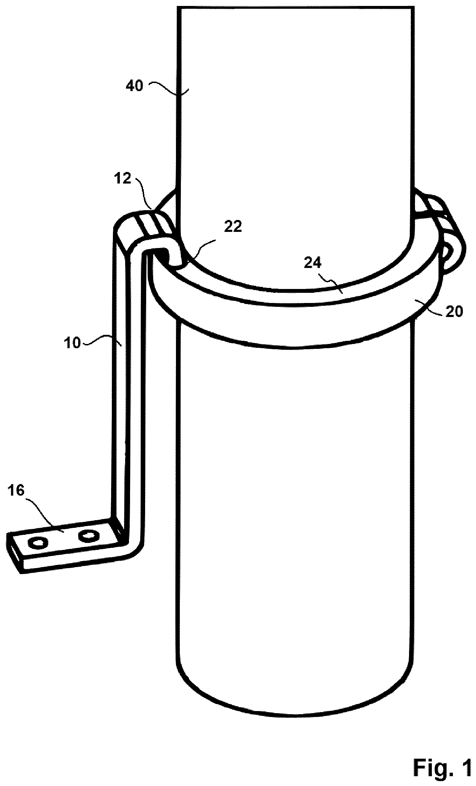

Bevorzugt kann die Schnellwechselhalterung als zweiteilige Vorrichtung ausgestaltet sein, bei der als Haltebauteil ein gesondertes Adapterelement mit der entsprechenden Ausnehmung vorgesehen ist. Das Adapterelement wiederum weist Befestigungsbereiche auf, mit denen es beispielsweise an einem Schweißbrenner 40 oder einem anderen rohrförmigen Bauteil wie einer Halterung befestigt werden kann. In einer in Figur 1 perspektivisch dargestellten beispielhaften Ausführungsform kann es sich bei dem Adapterelement um einen ein- oder mehrteiligen Adapterring handeln, der so gestaltet ist, dass er z.B. um ein Brennerrohr herum angebracht werden kann bzw. auf dieses aufgesteckt werden kann und dort durch Verschrauben geklemmt fixiert werden kann.

An mindestens einer Stelle in dem Adapterring 20 kann dann eine Ausnehmung 22 vorgesehen sein, die so ausgeformt ist, dass sie einen Einhängeabschnitt 12 eines Trägerelements 10 aufnehmen kann und das Trägerelement in formschlüssigen Eingriff mit dem Adapterring 20 bringen kann. In einer einfachen Ausführungsform kann der Endbereich des Trägerelements 10 und damit auch die Ausnehmung 22 mit einem gleichmäßigen rechteckigen bzw. flachen Querschnitt ausgebildet sein, oder alternativ mit einem Querschnitt, der beispielsweise dem gekrümmten Umfang des Adapterrings folgt. Dabei kann die Ausnehmung beispielsweise in einer axialen Endfläche 24 des Adapterrings 20 vorgesehen sein und im Wesentlichen senkrecht zur Ringachse verlaufen, so dass das eingehängte Trägerelement durch seine Gewichtskraft den Formschluss bewirkt.

Alternativ kann die Ausnehmung 22 auch in einem Winkel β zur Achse des Adapterrings 20 verlaufen, wie in weiteren Ausführungsformen ausführlicher beschrieben wird, wobei der Winkel kleiner als 90° sein soll und bevorzugt kleiner als ca. 45° oder kleiner als 30° sein kann, um einen sicheren Formschluss beim Einhängen zu gewährleisten. Entsprechend kann dann auch der Einhängeabschnitt 12 des Trägerelements 10 in einem Winkel verlaufen.

Das in Fig. 1 gezeigte Trägerelement 10 ist in Form eines einfachen streifenförmigen Winkels gestaltet. Ein solches Trägerelement 10 ist sehr einfach durch geeignete Umformverfahren aus einem streifenförmigen Materialstück, etwa einem ausreichend stabilen Metallblech herstellbar und bietet daher ein besonders kostengünstiges Herstellungsverfahren. Ebenso können aber auch anders geformte Trägerelemente genutzt werden, die demselben Befestigungsprinzip in einer entsprechenden Ausnehmung 22 folgen.

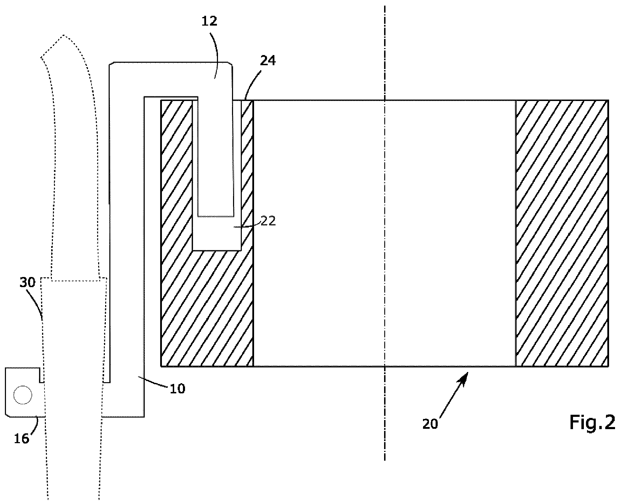

In den Figuren 2 bis 6 sind beispielhaft radiale Querschnitte durch einen Adapterring 20 im Bereich einer oder mehrerer Ausnehmungen 22 gezeigt, wobei in die Ausnehmungen entsprechend geformte Trägerelemente 10 eingebracht werden können. Es versteht sich, dass die dort beispielhaft gezeigten Merkmale auf Ausnehmungen in anderen Elementen, beispielsweise in nicht-ringförmigen Trägerelementen oder Ausnehmungen, die integral in Brennerhalterungen oder anderen Bauteilen vorgesehen sind, übertragen werden können. Außerdem können die Elemente weitere Bestandteile aufweisen wie etwa Befestigungselemente, Klemmschrauben, weitere Öffnungen und anderes, das in diesen schematischen Zeichnungen nicht dargestellt ist.

Figur 2 zeigt einen radialen Querschnitt durch ein Adapterelement in Form eines Adapterrings 20, der wie in Figur 1 auf einen Brenner 40 oder eine Halterung etc. angebracht werden kann. Die Ausnehmung 22 für das Trägerelement ist hier in Form eines senkrechten Sacklochs in der oberen Ringfläche 24 eingebracht, also in der Fläche, die im Betrieb von der Brennerdüse weg weist. Wie in der Figur zu sehen ist, wird das passend geformte Trägerelement mit einem gekrümmten Endbereich 12 in die Ausnehmung 22 eingehängt, so dass durch die Gewichtskraft des Trägerelements 10 und der daran befestigten Düse 30 ein sicherer Formschluss hergestellt wird. Gleichzeitig kann die Verbindung durch einfaches Anheben des Trägerelements 10 in die Gegenrichtung wieder gelöst werden und so ein schneller Wechsel der an dem Trägerelement 10 angebrachten Gasdüse 30 erfolgen. Der Einhängeabschnitt 12 ist hier als eckig gekrümmter Bereich mit zwei im Wesentlichen rechtwinkligen Biegungen gezeigt, kann aber auch geschwungen bzw. abgerundet geformt sein, z.B. mit U-förmigem Profil.

An seinem anderen Ende umfasst das Trägerelement 10 einen Düsenabschnitt 16 zur Befestigung einer Gasdüse 30, in dem beispielsweise integrierte Befestigungsmittel oder Aufnahmen für separate Befestigungsmittel vorgesehen sein können, um eine Gasdüse an dem Trägerelement zu befestigen. Dabei kann es sich um Öffnungen für Schrauben, Klemmelemente wie Schlauchschellen, Innen- oder Außengewinde zur Aufnahme eines entsprechend gestalteten Gegengewindes oder andere Mittel handeln. Mittels dieser Befestigungsmittel kann eine Gasdüse 30 dann an dem Trägerelement 10 lösbar oder dauerhaft starr fixiert werden. Die Befestigungsmittel können auch so ausgebildet sein, dass verschiedene Düsenelemente, z.B. mit verschiedenen Durchmessern, oder unterschiedliche Befestigungssysteme wie Schrauben und Klemmhalterungen damit verbindbar sind. In den folgenden Figuren wird der Düsenabschnitt 16 des Trägerelements 10 zur Vereinfachung nicht mehr gezeigt, soll aber selbstverständlich auf diese Beispiele übertragen werden. Die Form und Ausführung des Düsenabschnitts dagegen kann auch anders gestaltet sein als hier gezeigt, solange eine Befestigung der Gasdüse möglich ist.

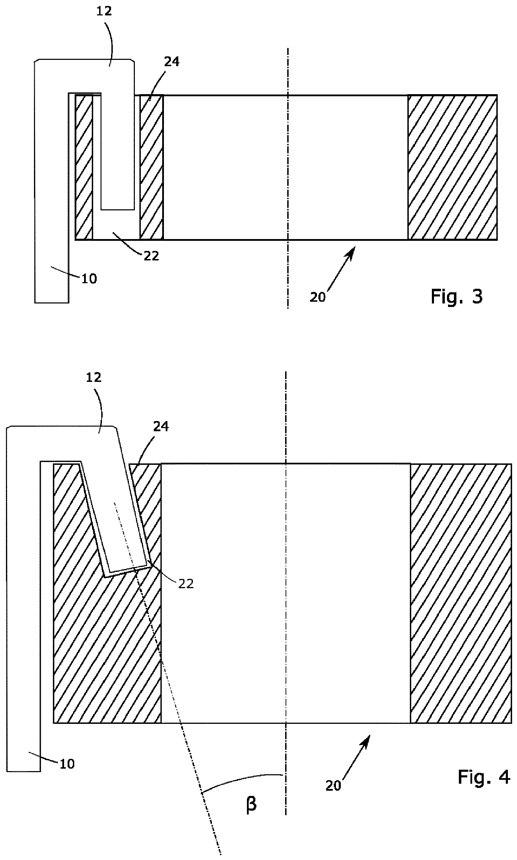

In Figur 3 ist ein Adapterring 20 gezeigt, in dem wie in Figur 2 eine parallel zur Ringachse verlaufende Ausnehmung 22 in der Endfläche 24 des Rings eingebracht ist. Allerdings ist die Ausnehmung hier als Durchgangsloch ausgeführt. Der entsprechende Einhängeabschnitt 12 des Trägerelements kann dann kürzer als das Loch oder auch länger ausgeführt werden, so dass das eingehängte Trägerelement 12 je nach Abmessung auch an der anderen Ringfläche wieder austreten kann. Die erweiterte Länge des Einhängeabschnitts 12 kann für einen besonders stabilen Sitz sorgen.

Figur 4 zeigt eine Ausführungsform, bei der eine Ausnehmung 22 ebenfalls in der axialen Endfläche 24 angeordnet ist, aber gegenüber der Mittelachse des Rings 20 um einen Winkel β nach außen verkippt ist. Eine solche Ausführung kann das Einschieben des Trägerelements 12 in die Ausnehmung vereinfachen und bietet außerdem auch einen leichten Halt gegen ein Herausschieben des Trägerelements 10 nach oben, beispielsweise bei einem versehentlichen Anstoßen des Trägerelements oder der Gasdüse. Der Winkel und die Abmessungen des Einhängeabschnitts sind bevorzugt aufeinander abgestimmt, um einen sicheren Halt zu gewährleisten.

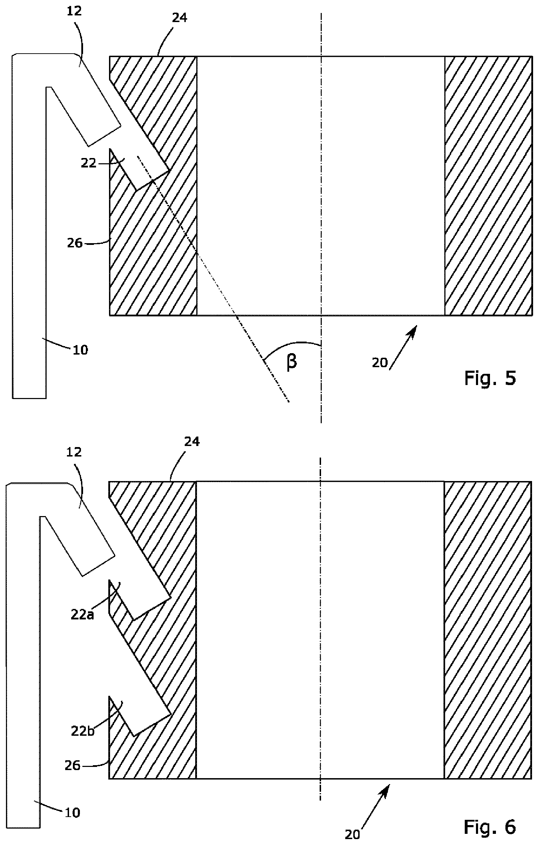

In Figur 5 ist eine Ausführungsform gezeigt, bei der eine Ausnehmung 22 in der äußeren Umfangsfläche 26 des Adapterrings 20 angeordnet ist. Wie bereits bei der vorherigen Ausführungsform ist die Ausnehmung um einen Winkel β zur Achse verkippt. Eine Ausnehmung in der Umfangsfläche 26 bietet beispielsweise Vorteile, wenn entlang der Ringachse (bzw. der Brennerachse) nach oben nur wenig Platz vorhanden ist. Insbesondere kann eine solche Ausnehmung auch in beliebigen anderen Bauteilen mit ausreichender Wanddicke leicht eingebracht werden, beispielsweise direkt in einer Halterung oder Ummantelung eines Schweißbrenners.

Schließlich ist in Figur 6 ein Adapterring 20 dargestellt, bei dem zwei wie in Figur 5 gestaltete Ausnehmungen 22a, 22b übereinander angebracht sind. Es versteht sich, dass die Ausnehmungen nicht direkt übereinander angeordnet sein müssen, sondern auch über den Umfang des Rings 20 hinweg versetzt angeordnet sein können. Auf diese Weise können mehrere Haltemöglichkeiten in verschiedenen Abständen zum Werkstück für die Gasdüse 30 vorgesehen sein, die auch ohne Versetzen des Adapterelements 20 schnell eingestellt werden können und dabei exakt definierte Abmessungen ermöglichen. So könnten auch deutlich mehr als zwei Ausnehmungen entlang der Achse des Brenners angebracht werden und flexibel die Düsenposition durch Ein- und Aushängen des Trägerelements variiert werden, ohne den Adapterring 20 verschieben zu müssen.

Zusätzlich oder alternativ können auch mehrere Ausnehmungen 22 in allen gezeigten Ausführungsformen um den Umfang des Adapterrings 20 herum angeordnet sein. So kann der Winkel der Gasdüse 30 zum Bearbeitungsbereich schnell verstellt werden, oder die Gasdüse bei besonderen Platzverhältnissen insbesondere beim manuellen Schweißen kurzfristig versetzt werden.

Außerdem können natürlich auch Ausnehmungen in der Umfangsfläche 26 und Ausnehmungen in der Endfläche 24 miteinander beliebig kombiniert werden.

In einer weiteren Ausführungsform kann die Ausnehmung zur Aufnahme des Einhängeabschnitts auch mehrere separate Bereiche umfassen. Beispielsweise könnte der Endbereich des Trägerelements so gestaltet sein, dass zwei oder mehr separate Hakenarme in entsprechende passende Ausnehmungen im Adapterring eingreifen. Die Ausnehmungen für diese Arme könnten zusammenhängend oder einzeln ausgestaltet sein.

Ebenso könnte ein breiterer oder gestufter Adapterring verwendet werden, der es möglich macht, auch in radialer Richtung den Abstand der Gasdüse zum Brenner auf einfache Weise zu verändern. Beispielsweise könnten auf einem breiteren Adapterring mehrere in radialer Richtung von einander beabstandete Ausnehmungen eingebracht sein, so dass ein geeignet geformter Einhängeabschnitt mit einer ausreichend breiten Auflagefläche in verschiedenen Radien bzw. Abständen zur Brennerachse eingehängt werden kann.

Der Einhängeabschnitt soll für alle Ausführungsformen so gestaltet sein, dass er in jeder vorgesehenen Position in den Adapterring eingehängt werden kann, ohne dabei die korrekte Einhängung und den festen Sitz der Gasdüse zu riskieren. Dazu sollte der obere Bereich, der an den Einhängeabschnitt 12 anschließt und in Ausführungsformen wie zum Beispiel in den Figuren 2 und 3 gezeigt auf dem Rand des Adapterrings zu liegen kommt, eine ausreichende Breite aufweisen. Über die Breite dieses Bereichs kann optional auch der Abstand der angefügten Gasdüse zum Brenner definiert werden.

Es ist ebenso denkbar, eine Gasdüse 30 einteilig mit einem entsprechenden Trägerelement auszubilden, also beispielsweise mit einem entsprechenden Einhängeabschnitt, der zum Einhängen in die Ausnehmungen wie vorstehend beschrieben vorgesehen ist.

Als Material für das Trägerelement 10 und das Haltebauteil 20 bietet sich beispielsweise ein Metall an, wie etwa ein beliebiger Stahl, aber auch Kunststoffe oder andere geeignete Materialien sind denkbar. Es versteht sich, dass dabei Hitzebeständigkeit und andere Merkmale wie die ausreichende Steifigkeit des Materials für die Auswahl zu beachten sind. Optional könnte beispielsweise auch eine kompressible Elastomerbeschichtung der Ausnehmung 22 und/oder des Einhängeabschnitts 12 dazu beitragen, das Trägerelement 10 in der Ausnehmung 22 durch Klemmkraft stärker zu fixieren.

Falls ein Schleppschuh oder eine ähnliche Abdeckung oder Brennerkonfiguration genutzt wird, kann anstelle eines Adapterelements auch direkt in der Abdeckung eine entsprechende Ausnehmung vorgesehen sein.

Ebenso könnte ein Brenner auch bereits mit einem Haltebauteil einteilig ausgestattet sein, der mindestens eine entsprechende Ausnehmung aufweist.

Alle vorstehend für ein Adapterelement beschriebenen Konfigurationen und Optionen können selbstverständlich ebenso auf Ausnehmungen in anderen Elementen angewandt werden.

Es versteht sich, dass alle Ausführungsformen der Erfindung und Kombinationen davon nicht nur in den beschriebenen Situationen eingesetzt werden können, sondern in allen Anwendungen, in denen eine Gasdüse oder ähnliche Vorrichtungen befestigt werden sollen. Insbesondere kann eine solche Befestigung nicht nur für eine Schleppgasdüse für sekundären Gasschutz, sondern auch als Halter für eine primäre Schutzgasdüse oder Aktivgasdüse genutzt werden und für alle Arten von Brennern oder Schweißgeräten genutzt werden. Ebenso versteht sich, dass beschriebene Elemente wie etwa der Adapterring nicht zwingend ringförmig ausgebildet sein müssen, sondern insbesondere nach außen im freien Bereich beliebig ausgestaltet sein können.

### Bezugszeichenliste

- 10: Trägerelement
- 12: Einhängeabschnitt
- 16: Düsenabschnitt
- 20: Adapterring
- 22: Ausnehmung
- 24: axiale Endfläche des Adapterrings
- 26: äußere Umfangsfläche des Adapterrings
- 30: Gasdüse
- 40: Brenner

## Patentansprüche

1. Vorrichtung zur auswechselbaren Befestigung einer Gasdüse, umfassend:
ein längliches Trägerelement (10), das einen Düsenabschnitt (16) zur Befestigung der Gasdüse (30) aufweist und mit einem gekrümmten Einhängeabschnitt (12) versehen ist,
und ein Haltebauteil (20), das mit mindestens einer Ausnehmung (22) versehen ist, welche so geformt ist, dass der Einhängeabschnitt (12) des Trägerelements in die Ausnehmung (22) eingebracht werden kann, so dass ein formschlüssiger Eingriff zwischen dem Trägerelement (10) und dem Haltebauteil (20) entsteht.

2. Vorrichtung nach Anspruch 1, wobei das Haltebauteil einen Adapterring (20) umfasst, der an einem rohrförmigen Bauteil befestigbar ist.

3. Vorrichtung nach Anspruch 2, wobei die mindestens eine Ausnehmung (22) in einer axialen Endfläche (24) des Adapterrings (20) angeordnet ist.

4. Vorrichtung nach einem der Ansprüche 2 oder 3, wobei die mindestens eine Ausnehmung (22) in der äußeren Umfangsfläche (26) des Adapterrings angeordnet ist.

5. Vorrichtung nach einem der Ansprüche 2 bis 4, wobei der Adapterring mit mehreren in axialer Richtung und/oder entlang des Umfangs des Adapterrings (20) voneinander beabstandeten Ausnehmungen (22a, 22b) versehen ist.

6. Vorrichtung nach einem der Ansprüche 2 bis 5, wobei die Ausnehmung (22) in einem Winkel (β) zur Mittelachse des Adapterrings (20) verläuft, wobei der Winkel kleiner als 90° ist.

7. Vorrichtung nach einem der vorhergehenden Ansprüche, wobei die mindestens eine Ausnehmung (22) als Sackloch oder als Durchgangsloch oder mittels einer Fräsung gefertigt ist.

8. Vorrichtung nach einem der vorhergehenden Ansprüche, wobei die Form der mindestens einen Ausnehmung (22) im Wesentlichen der Form des Einhängeabschnitts (12) entspricht.

9. Vorrichtung nach einem der vorhergehenden Ansprüche, wobei das Trägerelement (10) aus einem streifenförmigen Materialstück gefertigt ist.

10. Vorrichtung nach Anspruch 1, wobei das Haltebauteil (20) einstückig mit einem Schweißbrenner (40) oder einer Halterung für einen Schweißbrenner ausgebildet ist.

11. Vorrichtung nach einem der vorhergehenden Ansprüche mit einer an dem Düsenabschnitt (16) befestigten Gasdüse (30).

12. Brenner mit einer Vorrichtung nach Anspruch 11, wobei ein Bauteil des Brenners (40) oder der Brenner (40) selbst mittels des Haltebauteils (20) mit der Vorrichtung verbunden ist.
